# EUROPÄISCHE PATENTSCHRIFT

(11) **EP 2 456 671 B1**
(45) Veröffentlichungstag und Bekanntmachung des Hinweises auf die Patenterteilung: **03.09.2014**
(21) Anmeldenummer: 10735005.0
(22) Anmeldetag: 22.07.2010
(51) Int. Cl.: B64F 5/00

(54) **VERFAHREN UND VORRICHTUNG ZUR SYSTEMINSTALLATION SOWIE FRACHTLADESYSTEM**
METHOD AND DEVICE FOR SYSTEM INSTALLATION, AND FREIGHT LOADING SYSTEM
PROCÉDÉ ET DISPOSITIF D'INSTALLATION DE SYSTÈMES ET SYSTÈME POUR CHARGER UN CHARGEMENT

(30) Priorität: 23.07.2009 DE 102009034416; 23.07.2009 US 227802 P
(43) Veröffentlichungstag der Anmeldung: 30.05.2012
(73) Patentinhaber: Airbus Operations GmbH, 21129 Hamburg (DE)
(72) Erfinder: GOEHLICH, Robert, Alexander, 22761 Hamburg (DE); SAYILGAN, Cihangir, 20257 Hamburg (DE)
(74) Vertreter: Marschall, Stefan
(86) Internationale Anmeldenummer: PCT/EP2010/060643
(87) Internationale Veröffentlichungsnummer: WO 2011/009916

(56) Entgegenhaltungen:
- WO-A1-2010/136102
- CH-A- 349 493
- US-A- 3 170 553
- US-A1- 2007 025 832
- US-A1- 2008 250 626

## Beschreibung

Die Erfindung betrifft ein Verfahren zur Installation von Systemen in einem Flugzeugrumpf, eine Vorrichtung zur Installation von Systemen in einem Flugzeugrumpf nach dem Oberbegriff des Patentanspruchs 4 und ein Frachtladesystem nach dem Oberbegriff des Patentanspruchs 9.

Im Flugzeugbau werden herkömmlicherweise Konzepte zur Systeminstallation und Konzepte für Frachtladesysteme getrennt voneinander betrachtet. So bestehen bei den bekannten Konzepten keine Schnittstellen zwischen der Systeminstallation und den Frachtladesystemen, obwohl in beiden Fällen einzelne Elemente in einen Flugzeugrumpf zu befördern und positionsgenau anzuordnen sind.

Bei einem in der Patentanmeldung US 2008/0256026 A1 der Anmelderin beschriebenen Konzept werden zur Systeminstallation Rumpfabschnitte jeweils auf einem Förderfahrzeug gelagert und kontinuierlich in Querrichtung entlang einer Kreisbahn von einem Bauplatz zum nächsten Bauplatz bewegt. Ebenso ist ein vergleichbares Konzept mit einer getakteten Bewegung der Förderfahrzeuge bekannt.

Die nachveröffentlichte WO 2010/136102 A1 offenbart ein Verfahren zur Installation von Systemen in einem Flugzeugrumpf, bei dem eine Längsführung für mit kommissionierten Systemen bestückte Wagen in einem Flugzeugrumpf angeordnet wird.

Bei diesen bekannten Montage- bzw. Installationsprinzipien ist Bei diesen bekannten Montage- bzw. Installationsprinzipien ist jedoch kritisch, dass die jeweiligen Systeme wie Routen und Module, sowie Werkzeuge, Hilfsmittel und Kleinteile von dem Montagepersonal einzeln in den Rumpf zum jeweiligen Installationsort bewegt werden müssen, was in einem hohem Zeitaufwand resultiert. Zusätzlich stellen größere Systeme und Werkzeuge eine hohe körperliche Belastung für das Montagepersonal dar.

Frachtladesysteme für Stückgut wie Container und Gepäckstücke sollen eine schnelle Be- und Entladung eines Frachtraums ermöglichen. Ferner sollen die Frachtladesysteme nur ein geringes Gewicht aufweisen und eine nahezu vollständige Ausnutzung des Frachtraums ermöglichen.

Ein in der DE 42 38 095 C2 gezeigtes bekanntes Frachtladesystem sieht ein sich in Längsrichtung des Flugzeugs erstreckendes Förderband vor, mittels dessen das Stückgut in den Frachtraum befördert wird. Dieses Frachtladesystem erlaubt eine gute Ausnutzung des Frachtraums, jedoch ist zur Bewegung des Förderbandes ein sehr leistungsstarker Antrieb erforderlich.

Andere Frachtladesysteme sehen sogenannte Rollmatten vor, die großflächig im Frachtboden installiert sind. Die Rollmatten sind jedoch verhältnismäßig schwer und störanfällig bei Verschmutzung.

Ein den Rollmatten vergleichendes Frachtladesystem ist aus der DE 603 11 544 T2 bekannt. Bei diesem System ist im Frachtraumboden eine Vielzahl von in Längs- und Querrichtung des Flugzeugs nebeneinander angeordneten kugel- und rollenartigen Stellantrieben zur Bewegung des Stückgutes vorgesehen. Die Stellantriebe sind jedoch störanfällig für mechanische und elektrische Beschädigungen. Ferner ist die Be- und Entladung zeitaufwendig.

Aus der deutschen Patentanmeldung DE 199 23 529 A1 der Anmelderin ist ein Frachtladesystem bekannt, bei dem das Stückgut auf sich in Längsrichtung des Frachtraums erstreckenden Schienen geführt ist. Durch die Schienenführung sind zwar die Be- und Entladezeiten bzw. Frachtladezeiten gegenüber den vorbeschriebenen Lösungen reduziert, jedoch ist das Stückgut bei der Beladung in einer vorher festgelegten Reihenfolge auf den Schienen einzutakten, da eine Umpositionierung des Stückgutes innerhalb des Frachtraums nicht möglich ist. Weiterhin kann das Stückgut nur durch eine stirnseitige Öffnung in den Frachtraum befördert werden, was die Verwendung dieses Frachtladesystems auf Frachtflugzeuge beschränkt.

Aufgabe der vorliegenden Erfindung ist es, ein Verfahren und eine Vorrichtung zur Installation von Systemen bzw. Systemmodulen in einem Flugzeugrumpf, die die vorgenannten Nachteile beseitigen und eine schnelle Installation ermöglichen, sowie ein Frachtladesystem mit reduzierten Frachtladezeiten zu schaffen, das Merkmale der Vorrichtung zur Installation von Systemen aufweist.

Diese Aufgabe wird gelöst durch ein Verfahren zur Installation von Systemen in einem Flugzeugrumpf mit den Schritten des Patentanspruchs 1, eine Vorrichtung zur Installation von Systemen in einem Flugzeugrumpf mit den Merkmalen des Patentanspruchs 4 und durch ein Frachtladesystem mit den Merkmalen des Patentanspruchs 9.

Bei einem erfindungsgemäßen Verfahren zur Installation von Systemen in einem Flugzeugrumpf wird zuerst eine sich in Längsrichtung des Flugzeugrumpfes erstreckende Längsführung in dem Flugzeugrumpf angeordnet. Dann werden die zu installierenden Systeme außerhalb des Flugzeugrumpfes kommissioniert und auf einem Wagen entsprechend ihrer Kommissionierung abgelegt. Anschließend wird der zumindest eine Wagen auf der Längsführung zu den Bereichen geführt, in denen die Systeme zu installierenden sind.

An dem erfindungsgemäßen Verfahren ist vorteilhaft, dass die Systeme wie Routen, Module, Komponenten, Werkzeuge, Hilfsmittel und drgl. nicht mehr manuell und einzeln in den Rumpf zu befördern sind. Die benötigten Systeme werden außerhalb des Rumpfes vorkommissioniert und entsprechend ihrer Kommissionierung bequem über die Wagen in den Rumpf bewegt. Hierdurch wird die Installationszeit verringert. Die Kommissionierung kann insbesondere beim Lieferanten erfolgen, so dass quasi fertig kommissionierte Wagen anlieferbar sind. Hierdurch können die Wagen in der benötigten Reihenfolge angeliefert werden und die Installationszeit wird weiter reduziert. Weiterhin wird bei der erfindungsgemäßen Lösung die körperliche Belastung des Montagepersonals stark verringert, da die Systeme nicht mehr in den Flugzeugrumpf getragen werden müssen. Bei der Verwendung einer Vielzahl von Wagen kann die Installation von mehreren Systemen gleichzeitig erfolgen.
Die Längsführung ist besonders einfach zu installieren, weil sie stirnseitig in den Flugzeugrumpf eingebracht wird. Bevorzugterweise wird die Längsführung heckseitig in den Flugzeugrumpf eingebracht und im Unterflurbereich, d.h. im Bereich eines Frachtraumbodens, positioniert. Hierdurch kann auf bestehende Installations- bzw. Montageabläufe zurückgegriffen werden, so dass beispielsweise der Flugzeugrumpf bereits mit einem Cockpit versehen werden kann und somit bereits Arbeiten bzgl. des Cockpits ausgeführt werden können. Ferner hat dies den Vorteil, dass die Längsführung cockpitseitig optimal ausgerichtet werden kann, so dass zum Beispiel bei einer späteren Verwendung der Längsführung als Bestandteil eines Frachtladesystems aufwendige Umbauarbeiten entfallen.

Erfingdungsgemäß wird der zumindest eine Wagen bzgl. seiner Fahrtrichtung in dem Flugzeugrumpf gewendet. Dies bewirkt, dass die Wagen in dem Rumpf gewendet werden können und somit eine Art Kreisbahn gebildet ist, so dass bestückte Wagen und leere Wagen nicht kollidieren können.

Bei einem Ausführungsbeispiel ist eine Vielzahl von Flugzeugrümpfen in Querrichtung nebeneinander angeordnet. Hierdurch kann auf ein gemeinsames Schienen- bzw. Weichensystem außerhalb der Rümpfe zugegriffen werden, was die Eintaktung und Austaktung der Wagen stark vereinfacht.

Eine erfindungsgemäße Vorrichtung zur Installation von Systemen in einem Flugzeugrumpf, der durch eine Öffnung einseitig geöffnet ist, weist eine sich durch die Öffnung in den Flugzeugrumpf erstreckende Längsführung zur Aufnahme zumindest eines entlang der Längsführung bewegbaren Wagens auf. Die Längsführung in Kombination mit dem zumindest einen Wagen erlaubt eine Reduzierung der Installationszeit und eine Verringerung der körperlichen Belastung des Montagepersonals.

Erfindungsgemäß weist die Längsführung zwei zueinander parallel verlaufende Führungsabschnitte auf, die über einen Bogenabschnitt miteinander verbunden sind. Hierdurch können die Wagen bzgl. ihrer Fahrtrichtung in dem Flugzeugrumpf gewendet werden, so dass sich die Wagen bei einer Eintaktung und Austaktung nicht gegenseitig behindern.

Vorteilhafterweise ist außerhalb des Flugzeugrumpfes ein Weichensystem zum Eintakten der Wagen in geforderter Reihenfolge vorgesehen. Hierdurch können die Wagen entsprechend der benötigten Reihenfolge angeordnet werden. Das Weichensystem ist insbesondere dann von Vorteil, wenn mehrere mit Systemen zu bestückende Flugzeugrümpfe in Querrichtung nebeneinander angeordnet sind, so dass über ein gemeinsames Weichensystem sämtliche Flugzeugrümpfe ansteuerbar sind.

Zur exakten Positionierung der Systeme und zur weiteren Reduzierung der körperlichen Belastung für das Montagepersonal kann der zumindest eine Wagen einen Modulträger zum Abstützen des Systems bei der Installation aufweisen.

Bei einem Ausführungsbeispiel ist die Längsführung als ein Führungssystem eines Frachtladesystems für Stückgut ausgeführt.
Dies hat den Vorteil, dass nach der Beendigung der Systeminstallation die Längsführung nicht demontiert werden muss und somit die Montagezeit des Flugzeugs insgesamt verkürzt ist.

Ein erfindungsgemäßes Frachtladesystem für ein Flugzeug hat eine in einem Rumpf angeordnete schienenartige Längsführung und eine Vielzahl von auf der Längsführung geführten Schlitten zur Aufnahme von Stückgut. Erfindungsgemäß weist die Längsführung einen Bogenabschnitt zum Richtungswechsel bzw. Wenden der Schlitten auf. Die Längsführung ermöglicht eine schnelle Be- und Entladung des Flugzeugs bzw. Frachtraums, wobei durch den Bogenabschnitt die Reihenfolge der Schlitten in dem Frachtraum vertauscht werden kann. Des Weiteren erlaubt der Bogenabschnitt die Be- und Entladung des Frachtraums durch ein seitliches Frachttor, so dass das erfindungsgemäße Frachtladesystem nicht nur bei Frachtflugzeugen mit einem stirnseitigen Frachttor sondern auch bei Passagierflugzeugen einsetzbar ist. Die schnellere Be- und Entladung führt zu einer Verkürzung der Bodenzeiten der Flugzeuge und somit zu einer Kostenersparnis. Ferner ist die Längsführung verhältnismäßig störtunanfällig gegen Beschädigungen und Verschmutzungen, was sich in einem reduzierten Wartungsaufwand und in einer verlängerten Lebensdauer äußert. Des Weiteren hat die Längsführung ein geringeres Gewicht als beispielsweise die Rollmatten.

Vorteilhafterweise weisen die Schlitten Positionierhilfen zur Feinpositionierung des Stückgutes, insbesondere in Querrichtung des Frachtraums, auf.

Sonstige vorteilhafte Ausführungsbeispiele sind Gegenstand weiterer Unteransprüche.

Im Folgenden werden bevorzugte Ausführungsbeispiele der Erfindung anhand schematischer Darstellungen näher erläutert. Es zeigen:
Figur 1 einen Längsschnitt durch einen Flugzeugrumpf, in den sich eine erfindungsgemäße Vorrichtung erstreckt,
Figur 2 einen Querschnitt durch den Flugzeugrumpf aus Figur 1, und
Figur 3 einen Querschnitt durch den Flugzeugrumpf aus Figur 1 mit bestückten Containern.

In den Figuren tragen gleiche konstruktive Elemente die gleichen Bezugsziffern.

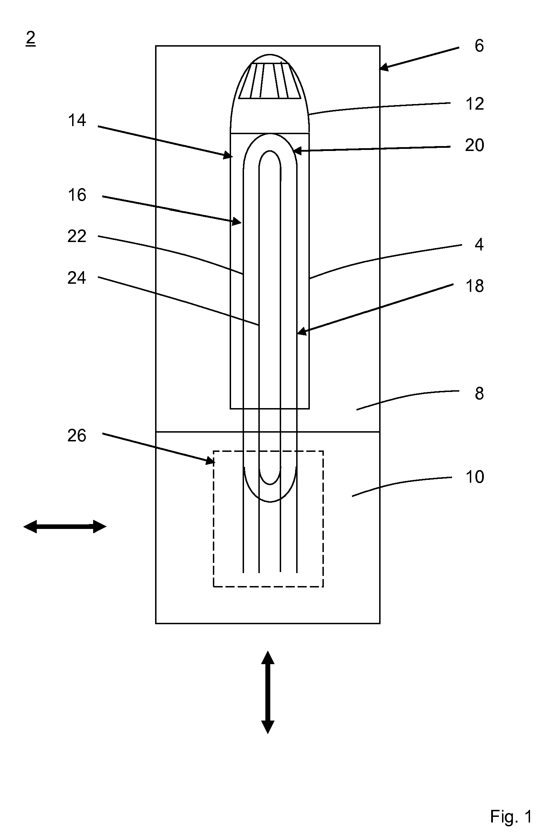

Figur 1 zeigt eine Draufsicht auf eine erfindungsgemäße Vorrichtung 2 zur Systeminstallation, die sich abschnittweise in einen stirnseitig geöffneten Flugzeugrumpf 4 erstreckt. Die Systeminstallation erfolgt in einem Bauplatz 6, der sich in einen Montagebereich 8 und in einen Bestückungsbereich 10 unterteilt. Beispielsweise ist nur ein Bauplatz 6 dargestellt. Es ist jedoch eine Vielzahl von derartigen Bauplätzen 6 in Querrichtung nebeneinander angeordnet.

Der Flugzeugrumpf 4 ist in dem Montagebereich 8 angeordnet und mit seiner heckseitigen Öffnung dem Bestückungsbereich 10 zugewandt. Nasenseitig ist der Flugzeugrumpf 4 von einem montierten Cockpit 12 verschlossen.

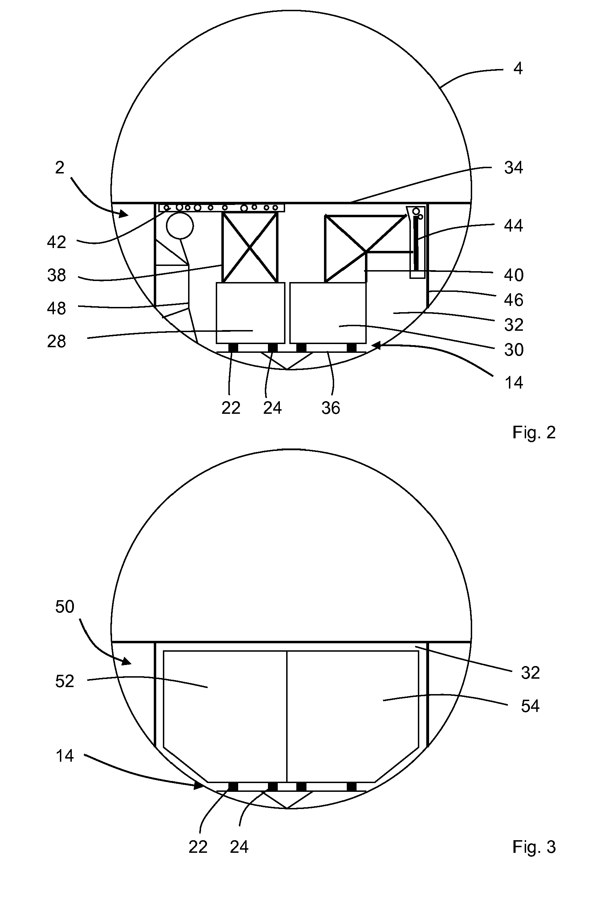

Die Vorrichtung 2 hat eine Längsführung 14, die zwei zueinander parallel verlaufende und sich in Längsrichtung des Flugzeugrumpfes 4 erstreckende Führungsabschnitte 16, 18 und einen die Führungsabschnitte 16, 18 cockpitseitig miteinander verbindenden Bogenabschnitt 20 aufweist. Die Führungsabschnitte 16, 18 und der Bogenabschnitt 20 werden jeweils von zwei zueinander parallel verlaufenden Schienen 22, 24 gebildet. Die aus dem Flugzeugrumpf 4 in den Bestückungsbereich 10 ragenden Führungsabschnitte 14, 16 sind in dem Bestückungsbereich mit einem Weichensystem 26 zur Bereitstellung von in Figur 2 gezeigten Wagen 28, 30 verbunden. Die Eintaktung bzw. Austaktung der Wagen 28, 30 erfolgt je nach der Schienenführung des Weichensystems 26, wie durch die Doppelpfeile angedeutet, in Längsrichtung oder in Querrichtung des Flugzeugrumpfes 4.

Gemäß Figur 2 ist die Vorrichtung 2 in einem Frachtraum 32 bzw. einem Unterflurbereich des Flugzeugrumpfes 4 unterhalb eines Passagierdecks 34 angeordnet. Die Längsführung 14 ist fest auf einer sich in Querrichtung des Flugzeugrumpfes 4 erstreckenden Verstärkung 36 einer Primärstruktur befestigt. Die Wagen 28, 30 werden auf der Längsführung 14 geführt und sind mit jeweils einem Modulträger 38, 40 zur Positionierung und Abstützung eines Systemmoduls 42, 44 bei der Installation an einem Abschnitt der Primärstruktur wie zum Beispiel einem nicht gezeigten, das Passagierdeck 34 stützenden, Querträger oder an einem Abschnitt einer vertikalen Abstützung 46 bestückt.

Die Modulträger 38, 40 sind verstellbar ausgeführt und erlauben ein Heben und Senken, Schwenken und eine Abstützung des jeweiligen Systemmoduls 42, 44.

Die Systemmodule 42, 44 enthalten zum Beispiel eine Vielzahl von nicht bezifferten Routen elektrischer, pneumatischer oder hydraulischer Systeme oder dienen selbst als Halterung für einzelne Routen. Des Weiteren sind die Wagen 28, 30 mit für die jeweilige Systeminstallation notwendigen Werkzeugen, Hilfsmitteln, Kleinteilen und Komponenten bestückt. Die Installation der Systemmodule 42, 44 sowie die Bewegung der Wagen 28, 30 entlang der Längsführung 14 erfolgt über entsprechendes Montagepersonal 48.

Im Folgenden wird ein bevorzugtes Verfahren zur Systeminstallation beschrieben: Der mit Systemen 42, 44 zu versehene Flugzeugrumpf 4 wird in dem Bauplatz 6 eingetaktet und derart ausgerichtet, dass seine stirnseitige Öffnung in Richtung des Bestückungsbereichs 10 gegenüber einem Anschluss eines Weichensystems 26 angeordnet ist. Dann werden die Längsführungen 14 in dem Unterflurbereich 32 installiert. Nun werden die mit den für die jeweilige Systeminstallation notwendigen Systemmodulen 42, 44, Werkzeugen, Kleinteilen und drgl. bestückten Wagen 28, 30 in dem Bestückungsbereich 10 in der benötigten Reihenfolge bereitgestellt. Vorzugsweise erfolgt die Bestückung der Wagen 42, 44 zulieferseitig. Die bestückten Wagen 28, 30 werden über das Weichensystem 26 entlang zum Beispiel des in den Figuren 1 und 2 gezeigten linken Führungsabschnitts 16 in dem Flugzeugrumpf 4 an die jeweilige Position bewegt. Das jeweilige Systemmodul 42, 44 wird installiert und der Wagen 28, 30 wird entlang des rechten Führungsabschnitts 18 aus dem Flugzeugrumpf 4 geführt und über das Weichensystem 26 einer erneuten Bestückung für eine weitere Systeminstallation zugeführt. Nach der Installation sämtlicher Systemmodule 42, 44 wird der Flugzeugrumpf 4 aus dem Bauplatz 6 ausgetaktet und zum Beispiel einer Endmontage zugeführt.

Gemäß Figur 3 dient die Längsführung 14 der erfindungsgemäßen Vorrichtung 2 als ein Führungssystem für ein Frachtladesystem 50. Auf der Längsführung 14 sind in Querrichtung nebeneinander Container 52, 54 positioniert. Die Container 52, 54 werden beispielsweise über ein nicht dargestelltes seitliches Frachttor und über nicht gezeigte Schlitten auf den Längsführung 14 angeordnet. Die Schlitten sind entlang der Längsführung 14 verfahrbar, so dass die Container 52, 54 in Flugzeuglängsrichtung in dem Frachtraum 32 positioniert werden können. Die Container 52, 54 sind fest auf den Schlitten fixiert. Die Verrieglung der Schlitten auf der Längsführung 14 erfolgt beispielsweise über entsprechende Krallen oder über entsprechende Aufnahmen in den Führungsabschnitten 16, 18 bzw. dem Bogenabschnitt 20. Zur Positionierung in Querrichtung des Frachtraums 32 weisen die Schlitten entsprechende Positionierhilfen auf, die eine Verschiebung der Container 52, 54 in Querrichtung ermöglichen.

Offenbart ist ein Verfahren zur Systeminstallation in einem Flugzeugrumpf 4, eine Vorrichtung 2 mit einem Schienensystem 14 zur Durchführung des Verfahrens und ein Frachtladesystem 50, das das Schienensystem 14 als Führungssystem für Stückgut 50, 52 verwendet.

### Bezugszeichenliste

- 2: Vorrichtung
- 4: Flugzeugrumpf
- 6: Bauplatz
- 8: Montagebereich
- 10: Bestückungsbereich
- 12: Cockpit
- 14: Längsführung
- 16: Führungsabschnitt
- 18: Führungsabschnitt
- 20: Bogenabschnitt
- 22: Schiene
- 24: Schiene
- 26: Weichensystem
- 28: Wagen
- 30: Wagen
- 32: Frachtraum
- 34: Passagierdeck
- 36: Verstärkung
- 38: Modulträger
- 40: Modulträger
- 42: Systemmodul
- 44: Systemmodul
- 46: vertikale Abstützung
- 48: Montagepersonal
- 50: Frachtladesystem
- 52: Container
- 54: Container

## Patentansprüche

1. Verfahren zur Installation von Systemen (42, 44) in einem Flugzeugrumpf (4), mit den Schritten:
Anordnen von einer sich durch eine stirnseitige Öffnung des Flugzeugrumpfs in Längsrichtung des Flugzeugrumpfes (4) erstreckenden Längsführung (14) innerhalb des Flugzeugrumpfes (4) mit zwei parallelen Führungsabschnitten (16, 18) und Verbinden der Führungsabschnitte (16, 18) über einen Bogenabschnitt (20) miteinander,
- Kommissionieren der zu installierenden Systeme (42. 44) außerhalb des Flugzeugrumpfes (4),
- Bestücken zumindest eines Wagens (28, 30) mit den kommissionierten Systemen (42, 44),
- Bewegen des Wagens (28, 30) in den Flugzeugrumpf (4) auf dem einen Führungsabschnitt (16) der Längsführung (14) in die Bereiche, in denen die Systeme (42, 44) zu installierenden sind und Entnahme der Wagen (28, 30) aus dem Flugzeugrumpf auf dem anderen Führungsabschnitt (18).

2. Verfahren nach Anspruch 1, wobei die Längsführung (14) heckseitig im Unterflurbereich (32) eingebracht wird.

3. Verfahren nach einem der vorhergehenden Ansprüche, wobei eine Vielzahl von Flugzeugrümpfen (4) in Querrichtung nebeneinander angeordnet wird.

4. Vorrichtung (2) zur Installation von Systemen (42, 44) in einem Flugzeugrumpf (4), der durch eine stirnseitige Öffnung geöffnet ist, **gekennzeichnet durch** zumindest einen Wagen (28, 30) zum Ablegen eines kommissionierten Systems (42, 44) und **durch** eine Längsführung (14) zur Aufnahme zumindest des einen Wagens (28, 30), die zwei zueinander parallel verlaufende und sich in Längsrichtung des Flugzeugrumpfes (4) **durch** die Öffnung erstreckende Führungsabschnitte (16, 18) und einen die Führungsabschnitte (16, 18) miteinander verbindenden Bogenabschnitt (20) aufweist.

5. Vorrichtung nach Anspruch 4, wobei ein Weichensystem (26) zum Eintakten der Wagen (28, 30) in geforderter Reihenfolge vorgesehen ist.

6. Vorrichtung nach Anspruch 5, wobei das Weichensystem (26) eine Vielzahl von Anschlüssen zur Versorgung einer Vielzahl von Flugzeugrümpfen (4) aufweist.

7. Vorrichtung nach einem der Ansprüche 4 bis 6, wobei der Wagen einen Modulträger (38, 40) zum Abstützen des Systems (42, 44) bei der Installation aufweist.

8. Verwendung der Längsführung einer Vorrichtung nach Anspruch 4 als Führungssystem eines Frachtladesystems (50).

9. Frachtladesystem (50) für ein Flugzeug, mit einer in einem Flugzeugrumpf (4) angeordneten schienenartigen Längsführung (14), mit zwei parallelen Führungsabschnitten (16, 18) und mit einer Vielzahl von auf der Längsführung (14) geführten Schlitten zur Aufnahme von Stückgut (52, 54), **dadurch gekennzeichnet, dass** die Längsführung (14) einen die parallelen Führungsabschnitte (16, 189 miteinander verbindenden Bogenabschnitt (20) zur Richtungsänderung der Schlitten aufweist.

10. Frachtladesystem nach Anspruch 9, wobei die Schlitten Positionierhilfen zur Feinpositionierung des Stückgutes (52, 54) haben.

## Claims

1. A method for the installation of systems (42, 44) in an aircraft fuselage (4), comprising the steps of:
- arranging in the longitudinal direction of the aircraft fuselage (4) a longitudinal guide (14), which extends through a front opening of the aircraft fuselage, within the aircraft fuselage (4) with two parallel guide sections (16, 18), and interconnecting the guide sections (16, 18) by way of a curved section (20),
- commissioning the systems (42, 44), which are to be installed, outside the aircraft fuselage (4),
- equipping at least one carriage (28, 30) with the commissioned systems (42, 44),
- moving the carriage (28, 30) into the aircraft fuselage (4) on the one guide section (16) of the longitudinal guide (14) in the regions in which the systems (42, 44) are to be installed, and removing the carriages (28, 30) from the aircraft fuselage (4) on the other guide section (18).

2. The method according to claim 1, wherein the longitudinal guide (14) is inserted aft in the subfloor region (32).

3. The method according to one of the preceding claims, wherein a plurality of aircraft fuselages (4) are placed side by side in the transverse direction.

4. A device (2) for the installation of systems (42, 44) in an aircraft fuselage (4) that is open through a front opening, **characterised by** at least one carriage (28, 30) for placing a commissioned system (42, 44) and by a longitudinal guide (14) for receiving at least the one carriage (28, 30), which longitudinal guide (14) comprises two guide sections (16, 18) that extend parallel to each other and in the longitudinal direction of the aircraft fuselage (4) through the opening and that comprises a curved section (20) which interconnects the guide sections (16, 18).

5. The device according to claim 4, wherein a switch system (26) for clocking the carriages (28, 30) in the required order is provided.

6. The device according to claim 5, wherein the switch system (26) comprises a plurality of connections for supplying a plurality of aircraft fuselages (4).

7. The device according to any one of claims 4 to 6, wherein the carriage comprises a module carrier (38, 40) for supporting the system (42, 44) during installation.

8. The use of the longitudinal guide of a device according to claim 4 as a guide system of a cargo loading system (50).

9. A cargo loading system (50) for an aircraft, comprising a rail-like longitudinal guide (14) arranged in an aircraft fuselage (4), which longitudinal guide (14) comprises two parallel guide sections (16, 18), and comprising a plurality of slides guided on the longitudinal guide (14) for receiving piece goods (52, 54), **characterised in that** the longitudinal guide (14) comprises a curved section (20), which interconnects the parallel guide sections (16, 18), for changing the direction of the slides.

10. The cargo loading system according to claim 9, wherein the slides comprise positioning aids for the fine positioning of the piece goods (52, 54).

## Revendications

1. Procédé d'installation de systèmes (42, 44) dans le fuselage d'un avion (4) comprenant les étapes :
- d'agencement d'un guide longitudinal (14) s'étendant à travers une ouverture frontale du fuselage d'avion dans le sens longitudinal du fuselage d'avion (4), à l'intérieur du fuselage d'avion (4), comprenant deux sections de guidage (16, 18) parallèles, et de liaison des sections de guidage (16, 18) entre elles par une section arquée (20),
- de préparation des systèmes (42, 44) à installer, hors du fuselage d'avion (4),
- de fourniture d'au moins un chariot (28, 30) aux systèmes (42, 44) préparés,
- de déplacement du chariot (28, 30) dans le fuselage d'avion (4) sur l'une section de guidage (16) du guide longitudinal (14) dans les endroits dans lesquels les systèmes (42, 44) sont à installer et enlèvement des chariots (28, 30) du fuselage d'avion (4) sur l'autre section de guidage (18).

2. Procédé selon la revendication 1, dans lequel le guide longitudinal (14) est disposé à l'arrière sous le plancher (32).

3. Procédé selon l'une quelconque des revendications précédentes, dans lequel une pluralité de fuselages d'avion (4) sont disposés les uns à côté des autres dans le sens transversal.

4. Dispositif (2) pour l'installation de systèmes (42, 44) dans un fuselage d'avion (4) qui est ouvert par une ouverture frontale, **caractérisé par** au moins un chariot (28, 30) pour poser un système (42, 44) préparé, et par un guide longitudinal (14) pour recevoir au moins l'un chariot (28, 30), qui présente deux sections de guidage (16, 18) parallèles entre elles et s'étendant dans le sens longitudinal du fuselage d'avion (4) à travers l'ouverture, et une section arquée (20) reliant les sections de guidage (16, 18) entre elles.

5. Dispositif selon la revendication 4, dans lequel un système d'aiguillage (26) pour synchroniser les chariots (28, 30) en séquence appelée est prévu.

6. Dispositif selon la revendication 5, dans lequel le système d'aiguillage (26) présente une pluralité de raccords pour alimenter une pluralité de fuselages d'avion (4).

7. Dispositif selon l'une des revendications 4 à 6, dans lequel le chariot présente un support de module (38, 40) pour soutenir le système (42, 44) lors de l'installation.

8. Emploi du guide longitudinal d'un dispositif selon la revendication 4 en tant que système de guidage d'un système de chargement de fret (50).

9. Système de chargement de fret (50) pour un avion, comprenant un guide longitudinal (14) de type rail disposé dans un fuselage d'avion (4), comprenant deux sections de guidage (16, 18) parallèles et une pluralité de rails dirigés sur le guide longitudinal (14) pour recevoir de la marchandise de détail (52, 54), **caractérisé en ce que** le guide longitudinal (14) présente une section arquée (20) reliant les sections de guidage (16, 18) parallèles entre elles pour modifier le sens des rails.

10. Système de chargement de fret selon la revendication 9, dans lequel les rails ont des aides au positionnement pour le positionnement précis de la marchandise de détail (52, 54).
